# EUROPÄISCHE PATENTSCHRIFT

(11) **EP 4 119 378 B1**
(45) Veröffentlichungstag und Bekanntmachung des Hinweises auf die Patenterteilung: **21.02.2024**
(21) Anmeldenummer: 22178269.1
(22) Anmeldetag: 10.06.2022
(51) Int. Cl.: B60K 7/00, B60K 17/04, B60K 17/30, B62D 5/04

(54) **RADANTRIEBSMODUL ZUR LENKUNG UND ZUM ANTRIEB EINES RADES**
WHEEL DRIVE MODULE FOR STEERING AND DRIVING A WHEEL
MODULE D'ENTRAÎNEMENT DE ROUE PERMETTANT DE DIRIGER ET D'ENTRAÎNER UNE ROUE

(30) Priorität: 14.07.2021 DE 102021118141
(43) Veröffentlichungstag der Anmeldung: 18.01.2023
(73) Patentinhaber: EBM-PAPST ST. GEORGEN GMBH & CO. KG, 78112 St. Georgen (DE)
(72) Erfinder: RIEDEL, Andreas, 90552 Röthenbach (DE)
(74) Vertreter: Staeger & Sperling Partnerschaftsgesellschaft mbB

(56) Entgegenhaltungen:
- WO-A1-2019/242979
- CN-A- 111 874 088
- DE-B3-102020 100 637
- DE-U1-202018 103 546
- US-A1- 2005 061 560

## Beschreibung

Die Erfindung betrifft ein Radantriebsmodul zur Lenkung und zum Antrieb eines Rades.

Aus dem Stand der Technik und beispielsweise aus der Schrift DE 20 2018 103 546 U1 sind bereits Radantriebsmodule bekannt, welche ein als Überlagerungsgetriebe bezeichenbares Getriebe aufweisen, durch welche eine gemeinsame Ritzelwelle um eine Rotationsachse als Lenkachse eines Rades drehbar und das Rad über eine Rotation der Ritzelwelle antreibbar ist.

Dabei ist vorgesehen, dass das Getriebe zwei Zahnkränze zum gemeinsamen Antrieb der Ritzelwelle aufweist. Die Zahnkränze sind jeweils über einen Elektromotor und eine zwischen dem jeweiligen Elektromotor und den Zahnkränzen vorsehbaren Übersetzung antreibbar.

Dadurch, dass die Zahnkränze jeweils über eine radial äußere Verzahnung und gegebenenfalls über eine zwischen dem jeweiligen Motor und dem jeweiligen Zahnkranz angeordnete Übersetzung angetrieben werden müssen, ist der Wirkungsgrad eines solchen Radantriebsmoduls vergleichsweise niedrig. Weiter kommt es durch das Ineinandergreifen bzw. durch die Interaktion der mechanischen Bauteile zu einer hohen Geräuschkulisse sowie zu einem starken Verschleiß.

Der Erfindung liegt deshalb die Aufgabe zugrunde, die vorgenannten Nachteile zu überwinden und ein Radantriebsmodul zur Lenkung und zum Antrieb eines Rades bereitzustellen, welches mit einem hohen Wirkungsgrad, leise und möglichst verschleißarm arbeitet.

Diese Aufgabe wird durch die Merkmalskombination gemäß Patentanspruch 1 gelöst.

Erfindungsgemäß wird daher ein Radantriebsmodul zur Lenkung und zum Antrieb eines Rades vorgeschlagen, welches ein Getriebe, einen ersten Elektromotor und einen zweiten Elektromotor aufweist. Das Getriebe weist eine Ritzelwelle sowie einen ersten ringförmigen Zahnkranz und einen zweiten ringförmigen Zahnkranz auf, wobei der erste Zahnkranz und der zweite Zahnkranz koaxial zueinander um eine gemeinsame Rotationsachse drehbar angeordnet sind. Die Ritzelwelle ist durch eine jeweilige Rotation des ersten Zahnkranzes und des zweiten Zahnkranzes um die Rotationsachse als Lenkachse des Rades drehbar und um eine Ritzelwellenachse der Ritzelwelle rotierbar. Dadurch, dass die Ritzelwelle sowohl durch den ersten Zahnkranz als auch durch den zweiten Zahnkranz antreibbar ist, werden die Rotationen der beiden Zahnkränze um ihre Rotationsachse an der Ritzelwelle überlagert, sodass das Getriebe auch vorliegend als Überlagerungsgetriebe bezeichenbar ist und sich eine Rotation der Ritzelwelle um die Rotationsachsen der Zahnkränze und um eine der Mittelachse der Ritzelwelle entsprechende Ritzelwellenachse aus den Rotationen beider Zahnkränze ergibt. Rotieren die Zahnkränze beispielsweise mit einer identischen Rotationsgeschwindigkeit in eine identische Richtung um die Rotationsachse, wird die Ritzelwelle mit einer Geschwindigkeit gleich der Rotationsgeschwindigkeit der Zahnkränze um die Rotationsachse gedreht, ohne dass die Ritzelwelle um die Ritzelwellenachse rotiert. Ein mit der Ritzelwelle verbundenes Rad wird dabei entsprechend um die Rotationsachse der Zahnkränze gedreht und mithin gelenkt. Werden die Zahnkränze beispielsweise mit einer identischen Rotationsgeschwindigkeit in einander entgegengesetzte Richtungen um die Rotationsachse rotiert, wird die Ritzelwelle um die Ritzelwellenachse rotiert, jedoch an ihrer Position in Umfangsrichtung um die Rotationsachse gehalten. Ein mit der Ritzelwellenachse verbundenes Rad wird entsprechend um seine Radachse angetrieben ohne um die Rotationsachse der Zahnkränze gelenkt zu werden. Dadurch ergibt sich also sowohl die Rotationsgeschwindigkeit der Ritzelwelle um die Rotationsachse als auch um die Ritzelwellenachse aus den Rotationsrichtungen der Zahnkränze und einer Differenz der Rotationsgeschwindigkeiten der Zahnkränze. Entsprechend ist das mit der Ritzelwelle verbindbare Rad um die Lenkachse lenkbar und über eine Rotation der Ritzelwelle um die Ritzelwellenachse um eine Radachse des Rades antreibbar. Dabei muss die Ritzelwelle zum Antrieb des Rades um die Radachse mit einer Antriebswelle des Rades wirkverbunden sein, sodass eine Übertragung der Rotation von der Ritzelwelle auf die Antriebswelle möglich ist. Ritzelwelle und Antriebswelle können koaxial und insbesondere integral miteinander ausgebildet sein. Die Ritzelwelle muss jedoch nicht unmittelbar mit der Antriebswelle des Rades verbunden sein. Zur Realisierung der Wirkverbindung kann beispielsweise ein Übersetzungsgetriebe zwischen der Ritzelwelle und der Antriebswelle des Rades vorgesehen sein. Erfindungsgemäß ist weiter vorgesehen, dass der erste Elektromotor zum Antrieb des ersten Zahnkranzes einen ersten ringförmig ausgebildeten Rotor aufweist, welcher die Rotationsachse umlaufend positionsfest an dem ersten Zahnkranz fixiert ist. Weiter weist der zweite Elektromotor zum Antrieb des zweiten Zahnkranzes einen zweiten ringförmig ausgebildeten Rotor auf, welcher die Rotationsachse umlaufend positionsfest an dem zweiten Zahnkranz fixiert ist.

Entsprechend sind die Rotoren der Elektromotoren unmittelbar mit dem jeweiligen Zahnkranz verbunden, sodass eine Rotation des jeweiligen Rotors unmittelbar zu einer Rotation des jeweiligen Zahnkranzes führt, ohne das ein dazwischenliegendes Getriebe oder dergleichen notwendig ist.

Auch kann der erste Rotor integral mit dem ersten Zahnkranz und der zweite Rotor integral mit dem zweiten Zahnkranz vorgesehen sein.

Da kein zwischengeschaltetes Getriebe bzw. keine zwischengeschaltete Übersetzung zwischen dem jeweiligen Rotor und dem jeweiligen Zahnkranz vorgesehen ist, kommt es zu einer geringeren Geräuschentwicklung bei gleichzeitig höherem Wirkungsgrad. Durch eine Reduktion der mechanisch miteinander interagierenden Komponenten wird zudem der Verschleiß des Radantriebsmoduls reduziert.

Soweit sich vorliegend auf eine Radialrichtung bezogen wird und nicht anders angegeben, ist darunter die Radialrichtung bezogen auf die gemeinsame Rotationsachse der Zahnkränze zu verstehen, welche auch als Lenkachse bezeichnet werden kann. Zudem bezieht sich auch die Bezeichnung Umfangsrichtung soweit nicht anders angegeben auf die Umfangsrichtung um die gemeinsame Rotationsachse der Zahnkränze bzw. die Lenkachse.

Gemäß einer vorteilhaften Weiterbildung ist vorgesehen, dass der erste Rotor an einer radial äußeren, also an einer in Radialrichtung außenliegenden Fläche des ersten Zahnkranzes und/oder an einer von der Ritzelwelle abgewandten Fläche des ersten Zahnkranzes an dem ersten Zahnkranz angeordnet und insbesondere mit diesem verbunden ist. Weiter ist zusätzlich oder alternativ der zweite Rotor an einer radial äußeren, also an einer in Radialrichtung außenliegenden Fläche des zweiten Zahnkranzes und/oder an einer von der Ritzelwelle abgewandten Fläche des zweiten Zahnkranzes an dem zweiten Zahnkranz angeordnet und insbesondere mit diesem verbunden.

Zudem kann der erste Elektromotor einen ersten ringförmigen Stator aufweisen, welcher die Rotationsachse in Umfangsrichtung umlaufend bzw. umgebend und angrenzend an den ersten Rotor angeordnet ist. Alternativ oder zusätzlich kann auch der zweite Elektromotor einen zweiten ringförmigen Stator aufweist, welcher die Rotationsachse in Umfangsrichtung umlaufend bzw. umgebend und angrenzend an den zweiten Rotor angeordnet ist.

Der jeweilige Rotor eines Elektromotors ist jeweils gegenüber dem jeweiligen Stator rotierbar und durch den jeweiligen Stator antreibbar. Ist das erfindungsgemäße Radantriebsmodul beispielsweise in einem Fahrzeug vorgesehen, kann der Stator positionsfest mit einem Rahmen des Fahrzeugs verbunden sein.

Der erste Stator umläuft den ersten Rotor in Umfangsrichtung gemäß einer vorteilhaften Weiterbildung radial außen. Alternativ oder zusätzlich kann der erste Stator an einer entlang der Rotationsachse von der Ritzelwelle abgewandten Seite des ersten Rotors angeordnet sein.

Analog dazu kann weiter vorgesehen sein, dass der zweite Stator den zweiten Rotor radial außen in Umfangsrichtung umläuft und/oder an einer entlang der Rotationsachse von der Ritzelwelle abgewandten Seite des zweiten Rotors angeordnet ist.

Erlaubt es der Bauraum bzw. der Platzbedarf der verwendeten Komponenten kann jedoch auch vorgesehen sein, dass ein Stator innerhalb eines radial innen an dem jeweiligen Zahnkranz angeordneten Rotors angeordnet ist.

Vorzugsweise weisen der erste und der zweite Zahnkranz jeweils eine Zahnkranzverzahnung auf, mit welcher die Zahnkränze jeweils in eine Ritzelverzahnung eines auf der Ritzelwelle angeordneten Ritzels eingreifen. Das Ritzel ist dabei weiter vorzugsweise drehfest mit der Ritzelwelle verbunden oder integral mit dieser ausgebildet.

Eine weitere vorteilhafte Variante des Radantriebsmoduls sieht vor, dass der erste Zahnkranz und/oder der zweite Zahnkranz jeweils ein Kegelrad, insbesondere ein Planrad ist. Die Zahnkranzverzahnungen der Zahnkränze sind einander zugewandt und das Ritzel zwischen den Zahnkranzverzahnungen angeordnet.

Der erste Rotor und/oder der zweite Rotor sind/ist jeweils als Kurzschlussläufer ausgebildet oder wird/werden jeweils durch eine Vielzahl von Permanentmagneten gebildet.

Vorzugsweise ist vorgesehen, dass der Rotor selbst keine elektrische Verbindung aufweist bzw. keine elektrische Kontaktierung bzw. Kommutierung von außerhalb benötigt, sodass die um die Rotationsachse rotierbaren Komponenten des Radantriebsmoduls nicht beispielsweise über einen Schleifring elektrisch kontaktiert werden müssen.

Zum Antrieb des jeweiligen Rotors ist vorzugsweise vorgesehen, dass der jeweilige Stator Spulen bzw. Wicklungen aufweist, welche elektrisch kontaktierbar sind und durch welche der Stator ausgebildet ist, den Rotor um die Rotationsachse anzutreiben.

Abhängig von einem gewünschten Verhältnis zwischen der Rotationsgeschwindigkeit der Ritzelwelle um die Ritzelwellenachse und einer Rotationsgeschwindigkeit des Rades um die Radachse kann das Radantriebsmodul ferner ein Übersetzungsgetriebe aufweisen, welches mit der Ritzelwelle um die Lenkachse drehbar sowie eingangsseitig mit der Ritzelwelle verbunden und ausgangsseitig mit einer Antriebswelle zum Antrieb des Rades verbindbar ist, sodass eine von der Ritzelwelle in das Übersetzungsgetriebe eingangsseitig, also auf eine Antriebswelle des Übersetzungsgetriebes übertragene Rotation um die Ritzelwellenachse ausgangsseitig über eine Abtriebswelle des Übersetzungsgetriebe auf das Rad bzw. die Antriebswelle des Rades übertragbar ist. Soll beispielsweise nur ein Positionsversatz zwischen Ritzelwelle und Antriebswelle des Rades vorgesehen werden, kann das Übersetzungsverhältnis des Übersetzungsgetriebes auch 1:1 sein.

Das Radantriebsmodul kann ferner einen Radaufnahmeraum zur Aufnahme des Rades aufweisen, welcher in Radialrichtung von dem ersten Zahnkranz und dem zweiten Zahnkranz begrenzt wird, wobei die Ritzelwelle abschnittsweise in dem Radaufnahmeraum angeordnet ist.

Zudem kann das Radantriebsmodul ferner einen in dem Radaufnahmeraum angeordneten und mit der Ritzelwelle um die Rotationsachse drehbaren Radtopf aufweisen, an welchem die Ritzelwelle um die Ritzelwellenachse drehbar gelagert ist und welcher an dem ersten Zahnkranz und dem zweiten Zahnkranz um die Rotationsachse drehbar gelagert ist.

Entsprechend kann gemäß einer vorteilhaften Weiterbildung vorgesehen sein, dass das Radantriebsmodul das Rad und einen Radaufnahmeraum zur Aufnahme des Rades aufweist. Der Radaufnahmeraum wird in Radialrichtung von dem ersten Zahnkranz und dem zweiten Zahnkranz begrenzt, wobei das Rad zumindest abschnittsweise in dem Radaufnahmeraum angeordnet und mit der Ritzelwelle wirkverbunden ist, sodass das Rad mit der Ritzelwelle um die Rotationsachse lenkbar und um eine Radachse des Rades antreibbar ist. Hierzu ist eine Antriebswelle des Rades drehbar mit der Ritzelwelle verbunden oder integral mit dieser ausgebildet.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein im Stand der Technik bekanntes Radantriebsmodul;
- Fig. 2: eine vorteilhafte Variante des erfindungsgemäßen Radantriebsmoduls im Schnitt.

Die Figuren sind beispielhaft schematisch. Gleiche Bezugszeichen in den Figuren weisen auf gleiche funktionale und/oder strukturelle Merkmale hin.

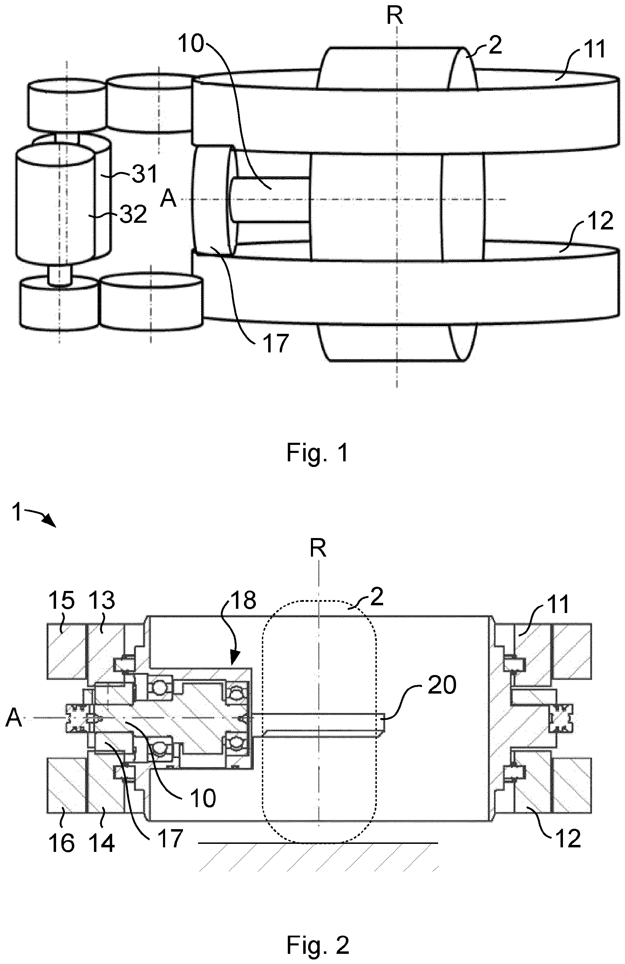

Obgleich in Figur 1 ein aus dem Stand der Technik bekanntes Radantriebsmodul dargestellt ist, werden soweit gleichwirkende strukturelle Merkmale vorhanden sind, gleiche Bezugszeichen wie in Figur 2 verwendet.

Entsprechend zeigt die Figur 1 einen nachteilhaften Stand der Technik, bei welchem ein Radantriebsmodul vorgesehen ist, bei welchem eine Ritzelwelle 10 über ein darauf drehfest angeordnetes Ritzel 17 von zwei Zahnkränzen 11, 12 angetrieben wird, wobei sich aus den Rotationsgeschwindigkeiten des ersten Zahnkranzes 11 und des zweiten Zahnkranzes 12 bzw. der Differenz der Rotationsgeschwindigkeiten sowie aus den Rotationsrichtungen der Zahnkränze 11, 12 um die gemeinsame Rotationsachse R eine Rotation der Ritzelwelle 10 um die Rotationsachse R und um die eigene Achse bzw. um die Ritzelwellenachse A ergibt.

Entsprechend kann das Rad 2 mit und/oder durch die Ritzelwelle 10 um die Rotationsachse R gedreht und somit gelenkt und hier unmittelbar um die Ritzelwellenachse A angetrieben werden.

Die Zahnkränze 11, 12 werden dabei über außenliegende Verzahnungen und zwischengeschaltete Übersetzungen von zwei Elektromotoren 31, 32 angetrieben, sodass es zu lauten Geräuschen und einem mechanischen Verschleiß kommt.

Figur 2 zeigt eine erfindungsgemäße Lösung in einem entlang der Rotationsachse R verlaufenden Halbschnitt, bei welcher der erste Rotor 13 des ersten Elektromotors unmittelbar an dem ersten Zahnkranz 11 und der zweite Rotor 14 des zweiten Elektromotors unmittelbar an dem zweiten Zahnkranz 12 angeordnet ist.

Vorliegend sind der erste Rotor 13 und der ersten Zahnkranz 11 integral miteinander ausgebildet dargestellt, wobei diese auch positionsfest aber lösbar aneinander fixiert sein können. Gleiches gilt für den zweiten Rotor 14 und den zweiten Zahnkranz 12, welche ebenfalls integral miteinander ausgebildet dargestellt sind.

Der erste Stator 15, welcher beispielsweise mit einem Fahrzeugrahmen verbindbar ist, umläuft den ersten Rotor 13 in Umfangsrichtung um die Rotationsachse R, sodass der erste Stator 15 durch eine entsprechende Ansteuerung und Bestromung den ersten Rotor 13 antreiben kann.

Auch der zweite Stator 16, welcher ebenfalls mit einem Fahrzeugrahmen verbindbar ist, umläuft den zweiten Rotor 14 in Umfangsrichtung um die Rotationsachse R, sodass der zweite Stator 16 durch eine entsprechende Ansteuerung und Bestromung den zweiten Rotor 14 antreiben kann.

Vorliegend sind die Statoren 15, 16 jeweils radial außen um die jeweiligen Rotoren 13, 14 angeordnet, wobei die Statoren 15, 16 bauraumabhängig auch entlang der Rotationsachse R angrenzend an die Rotoren 13, 14 angeordnet sein können, sodass beispielsweise der erste Stator 15 in der Darstellungsebene oberhalb des ersten Rotors 13 und der zweite Stator 15 unterhalb des zweiten Rotors 14 angeordnet sein können.

Dadurch, dass keine Übersetzungen oder andere mechanische Komponenten zwischen den Elektromotoren und den Zahnkränzen 11, 12 vorgesehen sind, erfolgt der Antrieb der Zahnkränze 11, 12 geräuscharm und nahezu ohne Verschleiß.

Obwohl ein Rad 2 auch unmittelbar drehfest auf der Ritzelwelle 10 angeordnet sein kann, ist vorliegend ein mit der Ritzelwelle 10 um die Rotationsachse R rotierbares Übersetzungsgetriebe 18 vorgesehen, durch welches ein Positionsversatz und eine definierte Übersetzung zwischen der Ritzelwelle 10 und der Antriebswelle 20 zum Antrieb des Rades 2 realisiert werden kann.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Radantriebsmodul (1) zur Lenkung und zum Antrieb eines Rades (2) mit einem Getriebe, einem ersten Elektromotor und einem zweiten Elektromotor, wobei das Getriebe eine Ritzelwelle (10) sowie einen ersten ringförmigen Zahnkranz (11) und einen zweiten ringförmigen Zahnkranz (12) aufweist, wobei der erste Zahnkranz (11) und der zweite Zahnkranz (12) koaxial zueinander um eine gemeinsame Rotationsachse (R) drehbar angeordnet sind, wobei die Ritzelwelle (10) durch eine jeweilige Rotation des ersten Zahnkranzes (11) und des zweiten Zahnkranzes (12) um die Rotationsachse (R) als Lenkachse des Rades (2) drehbar und um eine Ritzelwellenachse (A) der Ritzelwelle (10) rotierbar ist, sodass das mit der Ritzelwelle (10) verbindbares Rad (2) um die Lenkachse lenkbar und über eine Rotation der Ritzelwelle (10) um die Ritzelwellenachse (A) um eine Radachse des Rades (2) antreibbar ist, **dadurch gekennzeichnet, dass**
der erste Elektromotor zum Antrieb des ersten Zahnkranzes (11) einen ersten ringförmig ausgebildeten Rotor (13) aufweist, welcher die Rotationsachse (R) umlaufend positionsfest an dem ersten Zahnkranz (11) fixiert ist und
der zweite Elektromotor zum Antrieb des zweiten Zahnkranzes (12) einen zweiten ringförmig ausgebildeten Rotor (14) aufweist, welcher die Rotationsachse (R) umlaufend positionsfest an dem zweiten Zahnkranz (12) fixiert ist.

2. Radantriebsmodul nach Anspruch 1,
wobei der erste Rotor (13) an einer radial äußeren Fläche des ersten Zahnkranzes (11) und/oder an einer von der Ritzelwelle (10) abgewandten Fläche des ersten Zahnkranzes (11) an dem ersten Zahnkranz (11) angeordnet und insbesondere mit diesem verbunden ist
und/oder wobei der zweite Rotor (14) an einer radial äußeren Fläche des zweiten Zahnkranzes (12) und/oder an einer von der Ritzelwelle (10) abgewandten Fläche des zweiten Zahnkranzes (12) an dem zweiten Zahnkranz (12) angeordnet und insbesondere mit diesem verbunden ist.

3. Radantriebsmodul nach Anspruch 1 oder 2,
wobei der erste Elektromotor einen ersten ringförmigen Stator (15) aufweist, welcher die Rotationsachse (R) umlaufend und angrenzend an den ersten Rotor (13) angeordnet ist, und
wobei der zweite Elektromotor einen zweiten ringförmigen Stator (16) aufweist, welcher die Rotationsachse (R) umlaufend und angrenzend an den zweiten Rotor (14) angeordnet ist.

4. Radantriebsmodul nach Anspruch 3,
wobei der erste Stator (15) den ersten Rotor (13) radial außen in Umfangsrichtung umläuft und/oder an einer entlang der Rotationsachse (R) von der Ritzelwelle (10) abgewandten Seite des ersten Rotors (13) angeordnet ist.

5. Radantriebsmodul nach Anspruch 3 oder 4,
wobei der zweite Stator (16) den zweiten Rotor (14) radial außen in Umfangsrichtung umläuft und/oder an einer entlang der Rotationsachse (R) von der Ritzelwelle (10) abgewandten Seite des zweiten Rotors (14) angeordnet ist.

6. Radantriebsmodul nach einem der vorhergehenden Ansprüche,
wobei der erste und der zweite Zahnkranz (11, 12) jeweils eine Zahnkranzverzahnung aufweisen, mit welcher die Zahnkränze (11, 12) jeweils in eine Ritzelverzahnung eines auf der Ritzelwelle (10) angeordneten Ritzels (17) eingreifen.

7. Radantriebsmodul nach dem vorhergehenden Anspruch,
wobei der erste Zahnkranz (11) und/oder der zweite Zahnkranz (12) jeweils ein Kegelrad, insbesondere ein Planrad ist, deren jeweilige Zahnkranzverzahnung einander zugewandt sind und das Ritzel (17) zwischen den Zahnkranzverzahnungen angeordnet ist.

8. Radantriebsmodul nach einem der vorhergehenden Ansprüche,
wobei der erste Rotor (11) und/oder der zweite Rotor (12) jeweils als Kurzschlussläufer ausgebildet sind oder jeweils durch eine Vielzahl von Permanentmagneten gebildet werden.

9. Radantriebsmodul nach einem der vorhergehenden Ansprüche,
ferner aufweisend ein Übersetzungsgetriebe (18), welches mit der Ritzelwelle (10) um die Lenkachse (R) drehbar sowie eingangsseitig mit der Ritzelwelle (10) verbunden und ausgangsseitig mit einer Antriebswelle (20) zum Antrieb des Rades (2) verbindbar ist, sodass eine von der Ritzelwelle (10) in das Übersetzungsgetriebe (18) eingangsseitig eingebrachte Rotation um die Ritzelwellenachse (A) auf das Rad (2) übertragbar ist.

10. Radantriebsmodul nach einem der vorhergehenden Ansprüche,
ferner aufweisend das Rad (2) und einen Radaufnahmeraum zur Aufnahme des Rades (2), wobei der Radaufnahmeraum in Radialrichtung von dem ersten Zahnkranz (11) und dem zweiten Zahnkranz (12) begrenzt wird, das Rad (2) zumindest abschnittsweise in dem Radaufnahmeraum angeordnet ist und das Rad (2) mit der Ritzelwelle (10) wirkverbunden ist, sodass das Rad (2) mit der Ritzelwelle (10) um die Rotationsachse (R) lenkbar und um eine Radachse antreibbar ist.

## Claims

1. Wheel drive module (1) for steering and for driving a wheel (2), comprising a transmission, a first electric motor and a second electric motor, wherein the transmission has a pinion shaft (10) as well as a first annular gear ring (11) and a second annular gear ring (12), wherein the first gear ring (11) and the second gear ring (12) are arranged coaxial to one another so as to be rotatable about a common axis of rotation (R), wherein the pinion shaft (10) is rotatable by a respective rotation of the first gear ring (11) and the second gear ring (12) about the axis of rotation (R) as steering axis of the wheel (2) and is rotatable about a pinion shaft axis (A) of the pinion shaft (10), so that the wheel (2), which can be connected to the pinion shaft (10), can be steered about the steering axis and can be driven about a wheel axis of the wheel (2) via a rotation of the pinion shaft (10) about the pinion shaft axis (A), **characterized in that**
the first electric motor for driving the first gear ring (11) has a first annularly formed rotor (13) which is fixed in position on the first gear ring (11) and revolves about the axis of rotation (R), and
the second electric motor for driving the second gear ring (12) has a second ringshaped rotor (14), which is fixed in position on the second gear ring (12) and revolves about the axis of rotation (R).

2. The wheel drive module according to claim 1,
wherein the first rotor (13) is arranged on the first gear ring (11) on a radially outer surface of the first gear ring (11) and/or on a surface of the first gear ring (11) facing away from the pinion shaft (10) and, in particular, is connected thereto,
and/or wherein the second rotor (14) is arranged on the second gear ring (12) on a radially outer surface of the second gear ring (12) and/or on a surface of the second gear ring (12) facing away from the pinion shaft (10) and, in particular, is connected thereto.

3. The wheel drive module according to claim 1 or 2,
wherein the first electric motor has a first annular stator (15) which is arranged revolving about the axis of rotation (R) and adjacent to the first rotor (13), and wherein the second electric motor has a second annular stator (16) which is arranged revolving about the axis of rotation (R) and adjacent to the second rotor (14).

4. The wheel drive module according to claim 3,
wherein the first stator (15) revolves about the first rotor (13) radially on the outside in the circumferential direction and/or is arranged on a side of the first rotor (13) facing away from the pinion shaft (10) along the axis of rotation (R).

5. The wheel drive module according to claim 3 or 4,
wherein the second stator (16) revolves about the second rotor (14) radially on the outside in the circumferential direction and/or is arranged on a side of the second rotor (14) facing away from the pinion shaft (10) along the axis of rotation (R).

6. The wheel drive module according to any one of the preceding claims,
wherein the first and the second gear ring (11, 12) each have a gear ring toothing with which the gear rings (11, 12) each engage in a pinion toothing of a pinion (17) arranged on the pinion shaft (10).

7. The wheel drive module according to the preceding claim,
wherein the first gear ring (11) and/or the second gear ring (12) is in each case a bevel gear, in particular a crown gear, the respective gear ring toothing of which face each other and the pinion (17) is arranged between the gear ring toothings.

8. The wheel drive module according to any one of the preceding claims,
wherein the first rotor (11) and/or the second rotor (12) are each designed as a squirrel-cage rotor or are each formed by a multiplicity of permanent magnets.

9. The wheel drive module according to any one of the preceding claims, further having a transmission gearing (18) which is connected to the pinion shaft (10) to be rotatable about the steering axis (R) and is connected on the input side to the pinion shaft (10) and can be connected on the output side to a drive shaft (20) for driving the wheel (2) so that a rotation about the pinion shaft axis (A) introduced by the pinion shaft (10) into the transmission gearing (18) on the input side can be transmitted to the wheel (2).

10. The wheel drive module according to any one of the preceding claims, further having the wheel (2) and a wheel receiving space for receiving the wheel (2), wherein the wheel receiving space is delimited in the radial direction by the first gear ring (11) and the second gear ring (12), the wheel (2) is arranged at least in sections in the wheel receiving space, and the wheel (2) is operatively connected to the pinion shaft (10) so that the wheel (2) can be steered with the pinion shaft (10) about the axis of rotation (R) and can be driven about a wheel axis.

## Revendications

1. Module d'entraînement de roue (1) pour diriger et entraîner une roue (2) avec une boîte de vitesses, un premier moteur électrique et un second moteur électrique, dans lequel la boîte de vitesses présente un arbre de pignon (10) ainsi qu'une première couronne dentée (11) annulaire et une seconde couronne dentée (12) annulaire, dans lequel la première couronne dentée (11) et la seconde couronne dentée (12) sont disposées coaxialement l'une par rapport à l'autre de manière à pouvoir tourner autour d'un axe de rotation (R) commun, dans lequel l'arbre de pignon (10) par une rotation respective de la première couronne dentée (11) et de la seconde couronne dentée (12) peut tourner autour de l'axe de rotation (R) en tant qu'axe de direction de la roue (2) et peut être amené en rotation autour d'un axe d'arbre de pignon (A) de l'arbre de pignon (10), de sorte que la roue (2) pouvant être reliée à l'arbre de pignon (10) peut être dirigée autour de l'axe de direction et peut être entraînée autour d'un axe de roue de la roue (2) par l'intermédiaire d'une rotation de l'arbre de pignon (10) autour de l'axe d'arbre de pignon (A), **caractérisé en ce que** le premier moteur électrique pour entraîner la première couronne dentée (11) présente un premier rotor (13) réalisé de manière annulaire, lequel est fixé dans une position fixe sur la première couronne dentée (11) de manière à faire le tour de l'axe de rotation (R) et
le second moteur électrique pour entraîner la seconde couronne dentée (11) présente un second rotor (14) réalisé de manière annulaire, lequel est fixé dans une position fixe sur la seconde couronne dentée (12) de manière à faire le tour de l'axe de rotation (R).

2. Module d'entraînement de roue selon la revendication 1,
dans lequel le premier rotor (13) est disposé sur une surface radialement extérieure de la première couronne dentée (11) et/ou sur une surface de la première couronne dentée (11) opposée à l'arbre de pignon (10) sur la première couronne dentée (11) et est en particulier relié à celle-ci,
et/ou dans lequel le second rotor (14) est disposé sur une surface radialement extérieure de la seconde couronne dentée (12) et/ou sur une surface de la seconde couronne dentée (12) opposée à l'arbre de pignon (10) sur la seconde couronne dentée (12) et est en particulier relié à celle-ci.

3. Module d'entraînement de roue selon la revendication 1 ou 2,
dans lequel le premier moteur électrique présente un premier stator annulaire (15), lequel est disposé de manière à faire le tour de l'axe de rotation (R) et de manière adjacente au premier rotor (13), et
dans lequel le second moteur électrique présente un second stator annulaire (16), lequel est disposé de manière à faire le tour de l'axe de rotation (R) et de manière adjacente au second rotor (14).

4. Module d'entraînement de roue selon la revendication 3,
dans lequel le premier stator (15) fait le tour du premier rotor (13) radialement à l'extérieur dans la direction circonférentielle et/ou est disposé sur un côté du premier rotor (13) opposé à l'arbre de pignon (10) le long de l'axe de rotation (R).

5. Module d'entraînement de roue selon la revendication 3 ou 4,
dans lequel le second stator (16) fait le tour du second rotor (14) radialement à l'extérieur dans la direction circonférentielle et/ou est disposé sur un côté du second rotor (14) opposé à l'arbre de pignon (10) le long de l'axe de rotation (R).

6. Module d'entraînement de roue selon l'une quelconque des revendications précédentes,
dans lequel la première et la seconde couronne dentée (11, 12) présentent respectivement une denture de couronne dentée avec laquelle les couronnes dentées (11, 12) viennent en prise respectivement dans une denture de pignon d'un pignon (17) disposé sur l'arbre de pignon (10).

7. Module d'entraînement de roue selon la revendication précédente,
dans lequel la première couronne dentée (11) et/ou la seconde couronne dentée (12) est respectivement une roue conique, en particulier une roue plane, dont les dentures de couronne dentée respectives se font face et le pignon (17) est disposé entre les dentures de couronne dentée.

8. Module d'entraînement de roue selon l'une quelconque des revendications précédentes,
dans lequel le premier rotor (11) et/ou le second rotor (12) sont respectivement réalisés comme des rotors à cage d'écureuil ou sont respectivement formés par une pluralité d'aimants permanents.

9. Module d'entraînement de roue selon l'une quelconque des revendications précédentes,
présentant en outre un multiplicateur de vitesse (18), lequel est relié à l'arbre de pignon (10) de manière à pouvoir tourner autour de l'axe de direction (R) ainsi que du côté entrée à l'arbre de pignon (10) et peut être relié du côté sortie à un arbre d'entraînement (20) pour entraîner la roue (2), de sorte qu'une rotation autour de l'axe d'arbre de pignon (A) introduite depuis l'arbre de pignon (10) dans le multiplicateur de vitesse (18) du côté entrée peut être transférée à la roue (2).

10. Module d'entraînement de roue selon l'une quelconque des revendications précédentes,
présentant en outre la roue (2) et un espace de réception de roue pour recevoir la roue (2), dans lequel l'espace de réception de roue est délimité dans la direction radiale par la première couronne dentée (11) et la seconde couronne dentée (12), la roue (2) est disposée au moins sur certaines parties dans l'espace de réception de roue et la roue (2) est en liaison fonctionnelle avec l'arbre de pignon (10), de sorte que la roue (2) peut être dirigée avec l'arbre de pignon (10) autour de l'axe de rotation (R) et peut être entraînée autour d'un axe de roue.
